# EUROPEAN PATENT SPECIFICATION

(11) **EP 3 147 586 B1**
(45) Date of publication and mention of the grant of the patent: **09.05.2018**
(21) Application number: 16190174.9
(22) Date of filing: 22.09.2016
(51) Int. Cl.: F24H 8/00, F28F 17/00, F28D 21/00

(54) **A CONDENSATE COLLECTION AND DISCHARGE UNIT**
KONDENSATSAMMLUNGS- UND -ABFLUSSEINHEIT
UNITÉ DE COLLECTE ET DE DÉCHARGE DE CONDENSAT

(30) Priority: 22.09.2015 NL 2015487
(43) Date of publication of application: 29.03.2017
(73) Proprietor: Remeha B.V., 7332 BD Apeldoorn (NL)
(72) Inventor: van Vliet, Sebastiaan R., 7332 BD Apeldoorn (NL)
(74) Representative: V.O.

(56) References cited:
- EP-A1- 0 793 053
- EP-A2- 2 133 630
- GB-A- 2 487 381
- US-A- 5 115 798
- US-A- 5 361 795
- US-A1- 2013 118 608

## Description

### FIELD

The invention relates to a condensate collection and discharge unit.

### BACKGROUND

Condensate collection and discharge units are often associated with heat exchangers in boilers for removing condensate from a flue gas draft or the flue gas drafts of such heat exchangers. Such condensate collection and discharge units are typically provided with means to prevent flue gases from escaping through a condensate discharge opening of such units. The means to prevent escape of flue gases from these units are often referred to as U-traps or water locks.

However, these U-traps are vulnerable as they depend on a presence of water inside the lock to close off the passage for flue gas. A relatively large height of the U-trap is required to provide the necessary back-pressure to prevent flue gas leakage through the U-trap. Otherwise, the water can be blown out by flue gas pressure in the flue gas draft. Another problem of U-traps is that, after due course, the water in the U-trap can evaporate so that the passage is open and flue gas may enter the environment. Furthermore, the required height of the U-trap leads to an increased overall boiler size and costs.

To solve these issues, NL 1026260 C2, discloses a water lock with a buoyant body including valve element that closes off an upwardly protruding overflow pipe. Also US 2013/0118608 discloses such a water lock with a ball float that is positioned against a valve seat when no or little condensate has been collected in the condensate passage of the condensate trap. The ball float substantially or at least partially prevents flue gas from flowing past the valve seat because the ball float is positioned against the valve seat. As the condensate collects in the condensate passage, the ball float rises along with the level of condensate and eventually becomes separated from the valve seat thereby permitting the condensate to drain through the valve seat into a downstream passage. When the ball float is raised by the condensate level within the trap, the collected pool of condensate within the upstream condensate passage of the trap prevents the flue gas from traveling downstream of the valve seat.

A disadvantage of these known water lock or condensate traps is that pollution or contaminants present in condensate water may disrupt the sealing between the valve element and the fluid outlet opening, which can cause an open passage via which flue gas may leak into the environment. Furthermore, the water level in the known water lock fluctuates during operation. Consequently, the upper edge of the protruding pipe may extend above the water level within the water lock. The contaminants present at the upper edge will become dry and hard. Such hard contaminants may disrupt the sealing between the floating body and the upper edge of the protruding pipe.

### SUMMARY

The object of this invention is to provide a condensate collection and discharge unit with a reduced height relative to solutions based on the classic U-trap water lock, while still providing secure sealing of the fluid lock. More specifically, the invention is aimed at providing a condensate collection and discharge unit for removing condensate from a heat exchanger, comprising:
- a fluid collection reservoir having a fluid inlet, and a fluid outlet opening for discharging accumulated fluid from the fluid collection reservoir; and
- a valve associated with the fluid outlet opening for preventing flue gases to be discharged from the outlet opening,

wherein the fluid collection reservoir is arranged to be movable between at least one first position in which the fluid outlet opening is closed by the valve, and at least one second position in which the fluid outlet opening is disengaged from the valve so as to allow for the discharge of accumulated fluid from the fluid collection reservoir, wherein a biasing member biases the fluid collection reservoir by a biasing force in the at least one first position, and wherein the biasing force is selected to be overcome by a gravitational force generated by a predefined amount of fluid collected in the fluid collection reservoir, so as to move the fluid collection reservoir under gravity into the at least one second position.

The fluid lock according to the invention obviates the use of an upwardly protruding overflow pipe and a valve having a floating body as in NL1026260 C2 by relying on gravity rather than on buoyancy and by using a biasing element for providing the locking force of the water or fluid lock. As a result, the fluid lock according to the invention provides an increased safety against malfunctioning as the biasing element provides sufficient biasing force to hold the fluid lock in the closed position even if no fluid is present in the fluid collection reservoir and also substantially regardless of the gas pressure in the flue gas draft. In addition, the means for preventing escape of flue gases according to the invention are also less vulnerable to polluted condensate water of contaminants interfering with closure of the valve. Firstly, because the biasing force urges the valve in the closed position. Secondly, because the opening of the fluid outlet opening may, in some embodiments, be more periodical, instead of more or less continuous as is the case with a buoyancy operated valve. This may be due to the fact that the fluid lock is only transferred to a second position when the quantity of fluid in the fluid container exceeds a predefined threshold, after which a gravitational force resulting from the accumulated weight of the collected fluid and the fluid collection reservoir is effective to move the fluid lock against the biasing force to the second, open position. In special embodiments, it may be that only after removal of an amount of condensate liquid that the biasing force will be sufficient to move the reservoir upwardly and thus to close off the fluid outlet opening again. In embodiments having such a hysteresis effect, the advantage is obtained that once the valve is opened, an amount of condensate liquid flows through the fluid outlet opening thereby flushing away any contamination particles. Yet another advantage of the condensate collection and discharge unit may be that the valve in the condensate collection and discharge unit may be substantially always submerged. As a result, the formation of dried pollutants on a valve seat at the outlet opening is prevented.

Furthermore, the U-trap known from the art has to be filled during installation with a fluid, such as water, in order to function properly. As this is often neglected, the risk of malfunctioning is present. The unit according to the invention does not rely on a fluid being present to enact the closed position of the valve. As a result, the collector does not need to be filled with a fluid during installation.

The fluid inlet can be connected to a lowest point of the flue gas draft or flue exhaust channel via a flexible connection, for example a flexible tube or a flexible flange, so as to allow movement of the reservoir relative to the valve which generally will have a fixed position.

It should be noted that the at least one first position, in which the valve is closed, may comprise a range of first positions, wherein the valve is closed in each of these first positions. Each of the first positions may for example have a different tilt of the fluid collection reservoir relative to a horizontal plane. Similarly, the at least one second position, in which the valve is disengaged from the outlet opening, includes a range of second positions. At a certain predetermined point the fluid collection reservoir has tilted so that the valve is disengaged from the outlet opening, which means that the fluid collection reservoir is in one of the at least one second positions.

In an embodiment, the fluid collection reservoir may be pivotally mounted and the movement of the fluid collection reservoir between the at least one first and the at least one second position may be a pivoting movement.

A pivotally mounted fluid collection reservoir may be effective to provide a relatively high torque along the pivot axis caused by a relatively small amount of condensate liquid because the condensate reservoir may extend at a considerable distance from the pivot axis. The gravitational force exerted on the condensate liquid in the reservoir times said distance is the torque causing the pivoting movement. This torque is counter acted by the biasing force. Thus, the biasing force and, by consequence, the closing force may be relatively large which is beneficial in that the chance of leakage through the fluid outlet opening caused by pollutants and/or contaminants is reduced.

Additionally, the pivoting arrangement provides the possibility to position the fluid outlet opening bounding a valve seat in a side wall of the reservoir. The chance that pollutant particles stick on a vertically oriented valve seat is considerably lower than with a horizontally oriented valve seat as in the prior art. Thus, the chance of leakage is reduced.

In an embodiment, the valve may be a poppet valve that extends into the fluid outlet opening. The use of a poppet valve provides an improved seal for the outlet opening, because the sealing engagement is provided regardless of the presence of a fluid, such as for example water, in the fluid collection reservoir. Even in a case that no fluid would be present in the fluid collection reservoir, the biasing member ensures that the poppet valve is kept closed.

In an embodiment, the poppet valve may be stationary mounted with respect to the fluid outlet opening.

In an embodiment, the fluid collection reservoir has a bottom wall and at least one side wall, wherein the fluid outlet opening may be provided in the at least one side wall of the fluid collection reservoir adjacent the bottom wall.

In such an embodiment the fluid outlet opening bounding the valve seat is oriented substantially vertically. The chance that pollutant particles stick on a vertically oriented valve seat is considerably lower than with a horizontally oriented valve seat as in the prior art. Thus, the chance of leakage is reduced.

In an embodiment, the biasing member may comprise a spring, a counterweight or a combination thereof.

Springs of various types and/or materials can be used to manufacture the biasing member. The material may for example comprise metal or plastic, wherein the spring is manufactured to have specific characteristics, such as for example rigidity, elasticity or hysteresis. The biasing may also be provided using other biasing members, such as counterweights. In order to enhance the hysteresis effect, a combination of different elements may be used to provide the biasing member. This may for example comprise a combination of a (compression) spring and a counterweight, but may also comprise a combination of a (compression) spring and a magnet. Alternatively or additionally, the biasing member may include a combination of multiple springs or a rocker or toggle switch like construction with a spring. In such a rocker or toggle switch-like biasing construction the biasing force exerted by the biasing member increases and subsequently decreases when the reservoir moves from the at least one first position to the at least one second position.

In an embodiment, the fluid collection reservoir may include a settling chamber for collecting a first quantity of fluid, before an overflow allows the collected fluid to reach the valve.

The fluid collection reservoir may include a settling chamber, which is configured to collect pollution and contaminants in order to prevent pollution or contamination of the valve. Any fluid from the fluid inlet is received in the settling chamber, in which it substantially comes to a standstill. Pollution or contaminants present in the accumulated fluid are deposited on a bottom wall of the settling chamber, whereas the fluid that is substantially free of pollution and contaminants may transfer through an overflow to a part to the fluid collection reservoir in which the valve is positioned.

In an elaboration of the embodiment, the settling chamber may comprise at least one floating debris collector that is positioned near the overflow.

The settling chamber is provided in order to prevent pollutants in the fluid from reaching the valve. During settling, in which the fluid from the fluid inlet is substantially coming to a standstill, pollutants deposit on a bottom or side wall of the settling chamber. However, the fluid received from the fluid inlet may also comprise pollutants with a low relative density, which allows them to float on the fluid in the settling chamber. In order to prevent such floating pollutants from passing over the overflow and thus reaching the valve, the settling chamber may be provided with a floating debris collector. The floating debris collector may for example comprise a wall that extends downwards from an upper wall of the settling chamber and is positioned upstream of the overflow. The floating pollutants are stopped from passing over the overflow as they float against the wall. The floating debris collector thus substantially blocks all floating pollutants from passing over the overflow.

In an embodiment the fluid collection reservoir is pivotally mounted around a pivot axis, and wherein the movement of the fluid collection reservoir between the at least one first and the at least one second position is a pivoting movement. In this embodiment, the pivot axis is a horizontal axis that extends in a vertical plane that also contains a center of gravity of fluid collected in the fluid collection reservoir.

The pivoting movement of the fluid collection reservoir around the pivot axis may be provided by mounting said fluid collection reservoir on a pivoting member, such as a pivoting shaft. The gravitational force exerted on the condensate liquid in the reservoir times the distance between the pivoting member and the center of gravity of the fluid in the fluid collection reservoir is the torque causing the pivoting movement. As such, the torque is at least partially determined by the placement of the pivoting shaft relative to the length of the fluid collection reservoir. Placing the pivoting shaft substantially vertically above or below the center of gravity of the fluid in the settling chamber, provides a situation in which the torque is not influenced by any fluid and/or pollutants that are present in the settling chamber. As a result, the pivoting movement of the fluid collection reservoir is substantially only determined by fluid that has passed the overflow. This has the advantage that the pivoting movement only occurs when sufficient fluid to be removed is present in the fluid collection reservoir.

In an embodiment, the outlet opening may be provided in one of the at least one of the side walls and the bottom wall may be downwardly slanted towards a side wall that is provided with the outlet opening.

By applying a bottom wall that is downwardly slanted towards the side wall in which the outlet opening is provided, the condensate liquid is guided towards the lowest point adjacent the fluid outlet opening. The slanted bottom may additionally increase the hysteresis effect mentioned above so that the time during which the fluid outlet opening remains open is increased thus leading to an increased volume of discharged condensate liquid.

In an embodiment, the condensate collection and discharge unit additionally may comprise a support frame, wherein the fluid collection reservoir and the valve are mounted to the support frame.

A support frame can be used to mount both the valve and the fluid collection reservoir, and may additionally be designed to connect the condensate collection and discharge unit to external objects, such as a heat exchanger or other parts of a central heating boiler.

The invention additionally comprises a central heating boiler including a heat exchanger, and the condensate collection and discharge unit according to the invention.

A central heating boiler including the condensate collection and discharge unit according to the invention has several advantages of which the most important ones have been discussed above in relation to the condensate collection and discharge unit. The relatively small height of the condensate collection and discharge unit occupies a more limited amount of space in a boiler unit. For small boilers this means that boilers with a reduced size can be made, which results in a reduction of both manufacturing and shipping costs. In addition, smaller sized boilers are more easily fitted in tight spaces, such as (small) cupboards, which allows placement in buildings with only limited installation space available. For large floor-standing boilers, for example for commercial buildings or block heating for multiple residences, the advantage is that less space is required for accommodating the condensate collection and discharge unit. In the known floor-standing boilers, the U-trap is located near a lower end of the boiler, which requires the boiler to be placed on stands, adjustable poles or other support means. This requires extra space to accommodate the floor-standing boiler and/or reduces the space available for the flue. Using the condensate collection and discharge unit according to the invention, the need to raise the floor-standing boiler unit is reduced or substantially prevented, as this unit is smaller when compared to the known condensate collection and discharge units and can be mounted within the casing of the boiler.

Various embodiments including the main aspect of the invention will be further elucidated with reference to some examples shown in the figures. The embodiments may be combined or may be applied separately from each other.

### BRIEF DESCRIPTION OF THE FIGURES

Figure 1 shows a perspective view of an example of the condensate collection and discharge unit according to the invention;
Figure 2 shows a top view of Figure 1;
Figure 3 shows a schematic side view of Figure 1;
Figure 4 shows a cross-section along the line A-A of Figure 2 in the first position;
Figure 5 shows a cross-section along the line A-A of Figure 2 with the condensate collection and discharge unit in the second position;
Figure 6 shows a schematic side view of an alternative embodiment of the condensate collection and discharge unit according to the invention;
Figure 7A shows a schematic side view of an another alternative embodiment of the condensate collection and discharge unit according to the invention with the fluid outlet opening being closed;
Figure 7B shows a schematic side view similar to Figure 7A, but with the fluid outlet opening being opened; and
Figure 8 shows an example of condensate collection and discharge unit in which a horizontal pivot axis extends in a vertical plane that also contains a center of gravity of fluid collected in the settling chamber.

### DETAILED DESCRIPTION

In this application similar or corresponding features are denoted by similar of corresponding reference signs. The description of the various embodiments is not limited to the examples shown in the figures and the reference numbers used in the detailed description and the claims are not intended to limit the description of the embodiments. The reference numbers are included to elucidate the embodiments by referring to the examples shown in the figures.

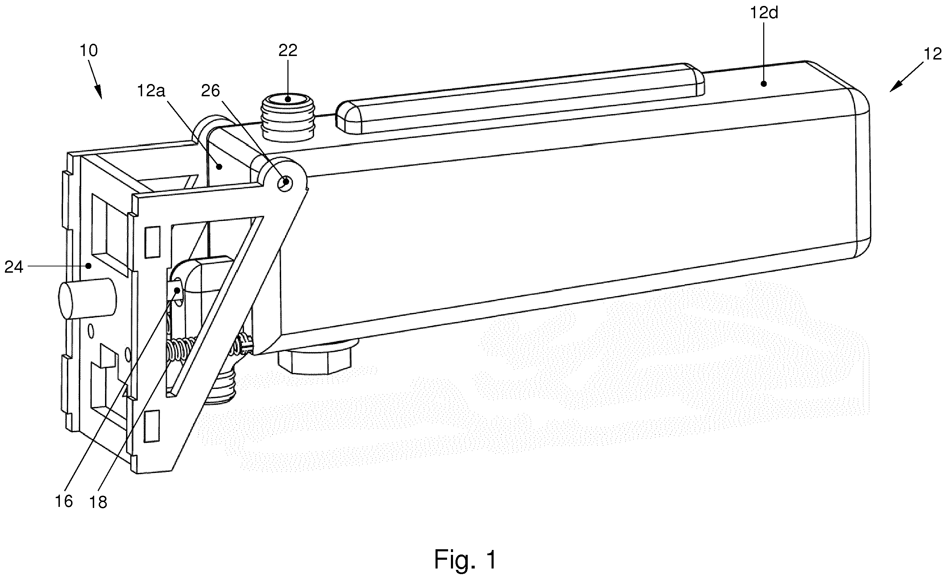

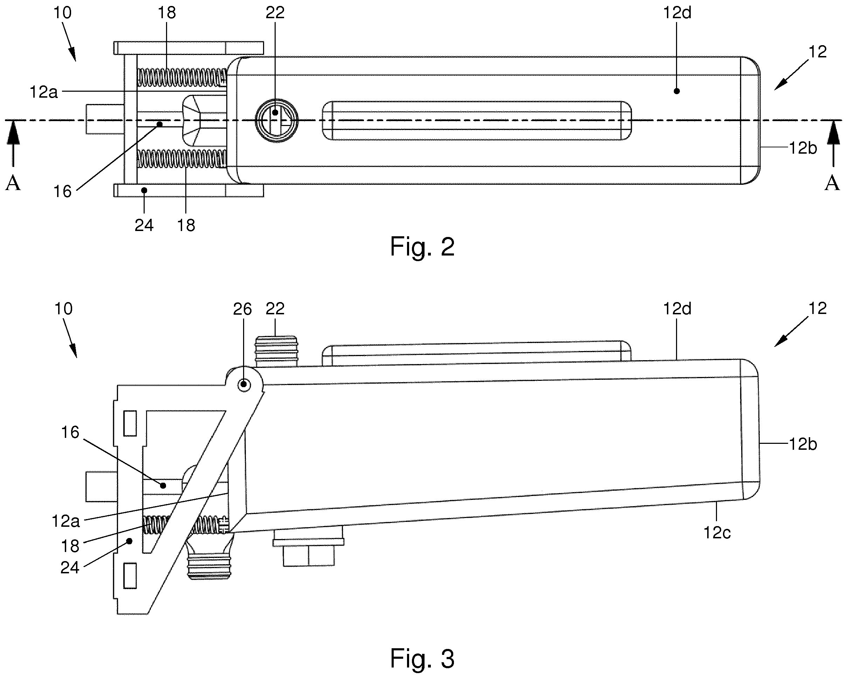

Figures 1-8 show examples of a condensate collection and fluid discharge unit according to the invention, in which various aspects including the main aspect of the invention are present.

In the examples shown in the figures, the collection condensate and discharge unit 10 comprises a fluid collection reservoir 12, having two end walls 12a, 12b, a bottom wall 12c and a top wall 12d. The fluid collection reservoir 12 also has a fluid inlet 22 for connection to a lowest point of a flue gas draft of a heat exchanger or the lowest point of an exhaust channel. The fluid collection reservoir 12 also has a fluid outlet opening 14 for discharging accumulated fluid from the fluid collection reservoir. The condensate collection and discharge unit 10 also comprises a valve 16 associated with the fluid outlet opening 14 for preventing flue gases to be discharged from the fluid outlet opening 14. The fluid collection reservoir 12 is arranged to be movable between at least one first position, in which the fluid outlet opening 14 is closed by the valve 16, and at least one second position, in which the fluid outlet opening 14 is disengaged from the valve 16 so as to allow for the discharge of accumulated fluid from the fluid collection reservoir 12. A biasing member 18, e.g. in the form of a compression spring, biases the fluid collection reservoir 12 of the unit 10 by a biasing force in the at least one first position in which valve is closed. The biasing force is selected to be overcome by a gravitational force generated by a predefined amount of fluid collected in the fluid collection reservoir 12, so as to cause the fluid collection reservoir 12 to move under gravity into the at least one second position in which the valve is disengaged from the outlet opening.

The advantages provided by the condensate collection and discharge unit according to the invention have been discussed in the summary, to which reference is made.

Various embodiments of the condensate collection and discharge unit are possible.

In the embodiment of the figures 1-5, the fluid collection reservoir 12 has a bottom wall 12c and two side walls 12a, 12b. The fluid outlet opening 14 is provided in a side wall 12a of the fluid collection reservoir 12. The bottom wall 12c is downwardly slanted towards the side wall 12a that is provided with the outlet opening 14.

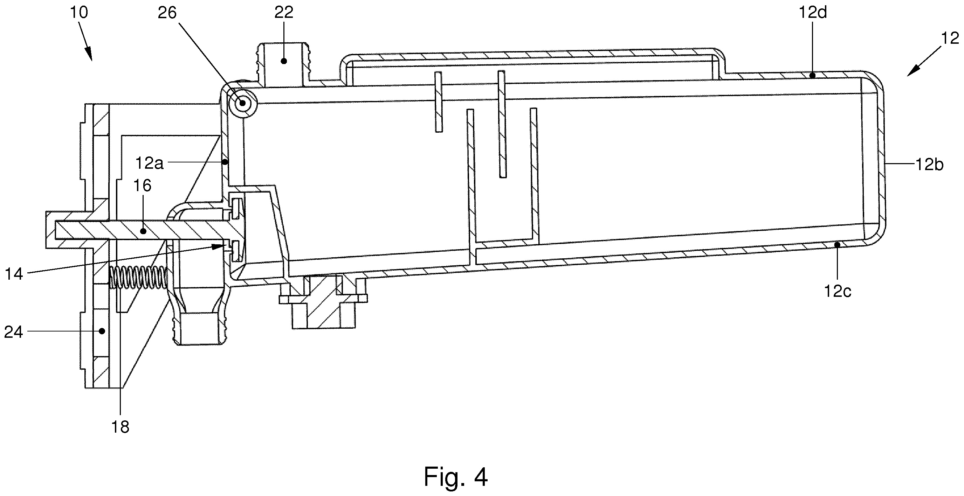

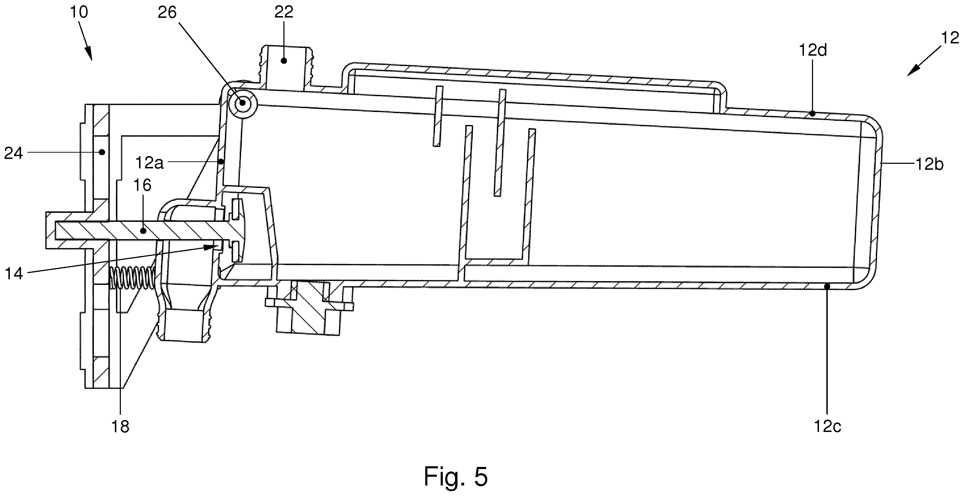

Figures 4 and 5 clearly show that the fluid outlet opening 14 is positioned in a lower half of the side wall 12a at a small distance from the bottom wall 12c. By positioning the fluid outlet opening 14 at a small distance from the bottom wall 12c, pollution and/or contamination of the valve 16 is substantially prevented. The vertical orientation of the valve seat that bounds the fluid outlet opening 14 also substantially prevents deposition of pollution particles. Any pollution or contaminants may deposit on the bottom wall 12c, thus preventing fouling of the valve 16, while the valve 16 is operable to open and close the outlet opening 14.

In the embodiment of the figures 1-6 the fluid collection reservoir 12 is pivotally mounted and the movement of the fluid collection reservoir 12 between the first and second position is a pivoting movement.

The pivotally mounted fluid collection reservoir 12 is used to increase the effect of the gravitational force generated by the accumulated fluid because of the torque that may be generated by the gravitational force may be relatively large in view of the arm length between the pivot axis and the center of gravity of the condensate liquid collected in the fluid collection reservoir.

An example of the embodiment of Figures 1-5 with the fluid collection reservoir 12 in the second, tilted position is shown in figure 5. This figure shows the fluid collection reservoir 12 having an elongated body and a slanted bottom wall 12c, which body is pivotally mounted on a pivot shaft 26 of a support frame 24. The fluid accumulating in the fluid collection reservoir 12 causes a torque in the pivoting axis which is counteracted by a biasing force generated by the biasing member 18. By virtue of the arm length between the center of gravity of the condensate liquid collected in the fluid collection reservoir and the pivot axis, the torque may be relatively large. The relatively large torque caused by the gravity forces of the collected condensate liquid and the relatively large biasing force needed to counteract that torque have the advantage that any forces that counteract the opening of the valve, for example static friction or a force caused by sticking of the valve member on the valve seat possibly caused by pollution, are more easily overcome relative to an embodiment having a linearly moving reservoir.

In the embodiment of figures 1-6 the valve 16 is a poppet valve that extends into the fluid outlet opening 14. The poppet valve 16 provides a reliable seal for the outlet opening 14, because the sealing engagement is provided regardless of the presence of a condensate liquid in the fluid collection reservoir 12. Even in a case that no fluid would be present in the fluid collection reservoir 12, the biasing member 18 ensures that the poppet valve 16 is kept closed with a considerable force. This is in contrast with the disclosure of NL 1026260 C2, in which the closing force exerted by the floating body is very low. In the examples shown, the poppet valve 16 is stationary mounted with respect to the fluid outlet opening 14.

In the embodiment of figures 1-7, the biasing member 18 comprises a compression spring. The compression spring 18 is configured to be compressed once a predetermined threshold amount of fluid is accumulated in the fluid collection reservoir 20.

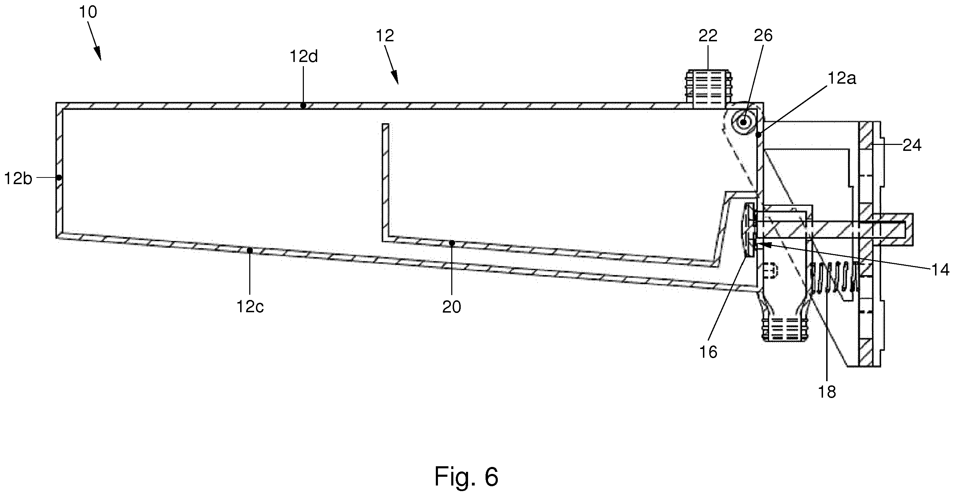

In the embodiment of figure 6 the fluid collection reservoir 12 includes a settling chamber 20 for collecting a first quantity of fluid, before an overflow allows the collected fluid to reach the valve 16. The overflow shown in figure 6 is an integral overflow. The condensate liquid in the settling chamber 20 is substantially at a standstill or, at least flowing at a relatively low speed, before it is transferred over the overflow. By providing a substantial standstill or at least a relatively low flow speed in the settling chamber, the pollution and/or contamination is deposited in the settling chamber 20 and pollution and/or contamination of the valve 16 is substantially prevented.

In an elaboration of the embodiment shown in figures 4-5, the settling chamber 20 comprises at least one floating debris collector that is positioned near the overflow.

The settling chamber 20 is provided in order to prevent pollutants in the fluid from reaching the valve 16. During settling, in which the fluid from the fluid inlet is substantially coming to a standstill in the settling chamber, pollutants deposit on a bottom or side wall of the settling chamber 20. However, the fluid received from the fluid inlet may also comprise pollutants with such a low relative density that they float on the fluid surface in the settling chamber 20. In order to prevent such floating pollutants from passing over the overflow and thus reaching the valve 16, the settling chamber 20 is provided with a floating debris collector. The floating debris collector may, such as shown in the examples of figures 4 and 5, comprise a wall that extends downwards from an upper wall of the settling chamber 20 and is positioned upstream of the overflow. The floating pollutants are stopped from passing over the overflow as they float against the wall. The floating debris collector thus substantially blocks all floating pollutants from reaching and passing over the overflow.

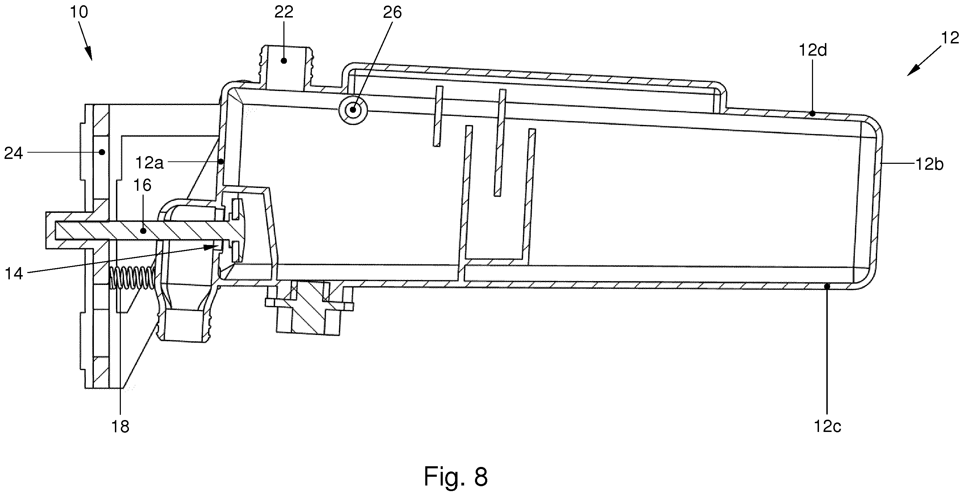

In an embodiment, of which an example is shown in figure 8, the fluid collection reservoir 12 is also pivotally mounted around a pivot axis. Agian, the movement of the fluid collection reservoir 12 between the at least one first and the at least one second position is a pivoting movement. In this particular embodiment, the pivot axis is a horizontal axis that extends in a vertical plane that also contains a center of gravity of fluid collected in the settling chamber 20.

The pivoting movement of the fluid collection reservoir 12 around the pivot axis may be provided by mounting said fluid collection reservoir on a pivoting member, such as a pivoting shaft 26. The gravitational force exerted on the condensate liquid in the reservoir 12 times the distance between the pivoting member 26 and the center of gravity of the fluid in the fluid collection reservoir is the torque causing the pivoting movement. As such, the torque is at least partially determined by the placement of the pivoting shaft relative to the length of the fluid collection reservoir. Placing the pivoting shaft substantially vertically above or below the center of gravity of the fluid in the settling chamber, provides a situation in which the torque is not influenced by any fluid and/or pollutants that are present in the settling chamber. As a result, the pivoting movement of the fluid collection reservoir is substantially only determined by fluid that has passed the overflow. This has the advantage that the pivoting movement only occurs when sufficient fluid to be removed is present in the fluid collection reservoir 12. Additionally, collection of debris in the settling chamber 20 will have no or very limited impact on the pivoting movement because the center of gravity of the debris is vertically below the pivoting shaft 26.

In the embodiment of figures 1-6, the condensate collection and discharge unit additionally comprises a support frame 24, wherein the fluid collection reservoir 12 and the valve 16 are mounted to the support frame 24. The figures show that the fluid collection reservoir 12 is pivotally mounted to a pivot shaft 26 of the support frame 24 and is also connected to the biasing element 18. The biasing element 18 has a second end that is connected to the support frame 24, thus also connecting the support frame 24 and the fluid collection reservoir 12. The valve 16 is fixedly mounted to the support frame 24 near the connection of the biasing element 18 with the support frame 24.

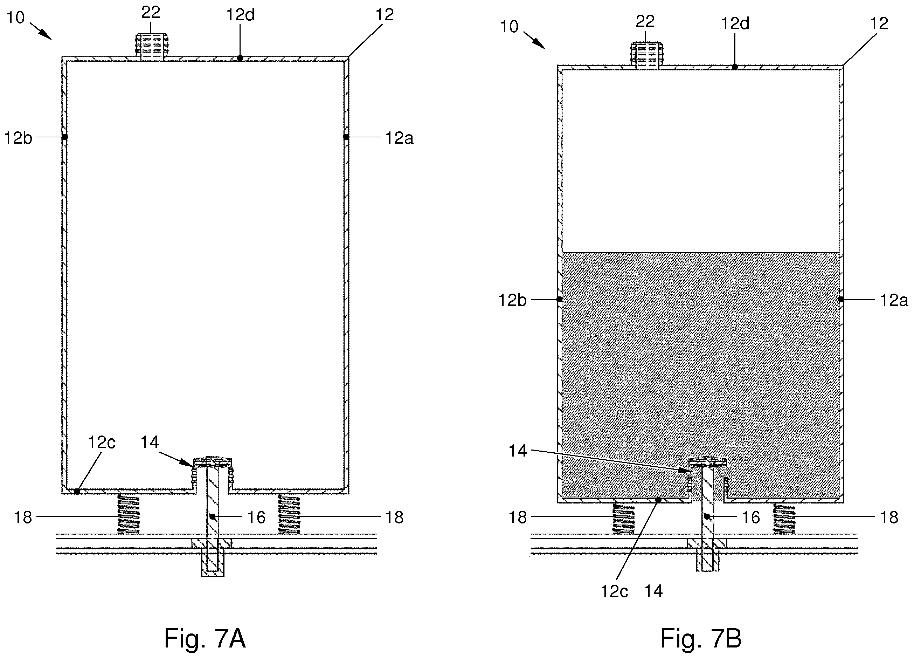

In the embodiment shown in figure 7A and figure 7B, the fluid collection reservoir 12 comprises a box-like or a cylindrical reservoir having a downwardly directed outlet opening 14, wherein the fluid collection reservoir 12 is supported by a biasing member 18 comprising at least one biasing element.

In an embodiment, the condensate collection and discharge unit may include a magnet and a co-operating part of ferromagnetic material. One of the magnet and the co-operating part of ferromagnetic material may be mounted on the moveable fluid collection reservoir 12. The other one of the magnet and the co-operating part of ferromagnetic material may be connected to a part of the support frame 24 or the boiler so that it is fixedly positioned relative to the valve. When the reservoir is in the at least one first position, the magnet and the co-operating part of ferromagnetic material are attached to each other. When the reservoir is in the at least one second position, the magnet and the co-operating part of ferromagnetic material are disengaged from each other.

By virtue of the presence of the magnet and the co-operating part of ferromagnetic material, the hysteresis effect described above may be increased. In other words, the fluid collection reservoir must be filled with a larger amount of condensate before the fluid collection reservoir moves from the at least one first to the at least one second position than when no magnet is present. Indeed, not only the biasing force has to be overcome but also the magnetic force. Because the magnetic force is not present or dramatically reduced when the fluid collection reservoir 12 is in the at least one second position, it is only after this larger amount of condensate has been discharged that the fluid collection reservoir returns to the at least one first position under influence of force of biasing element only.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below. Various embodiments may be applied in combination or may be applied independently from one another. Reference numbers used in the above detailed description are not intended to limit the description of the embodiments to the examples shown in the figures. The figures just represent examples and the embodiments may be embodied in other ways than the specific way shown in the examples of the drawings.

### Legend

10 - condensate collection and discharge unit
12 - fluid collection reservoir
12a - first fluid container end wall
12b - second fluid container end wall
12c - fluid container bottom wall
12d - fluid container top wall
14 - fluid outlet opening
16 - valve
18 - biasing element
20 - settling chamber
22 - fluid inlet
24 - support frame
26 - pivot shaft

## Claims

1. Condensate collection and discharge unit (10) for removing condensate from a heat exchanger, comprising:
- a fluid collection reservoir (12) having a fluid inlet (22), and a fluid outlet opening (14) for discharging accumulated fluid from the fluid collection reservoir; and
- a valve (16) associated with the fluid outlet opening (14) for preventing flue gases to be discharged from the outlet opening (14), **characterized in that** the fluid collection reservoir (12) is arranged to be movable between at least one first position in which the fluid outlet opening (14) is closed by the valve (16), and at least one second position in which the fluid outlet opening (14) is disengaged from the valve (16) so as to allow for the discharge of accumulated fluid from the fluid collection reservoir (12), wherein a biasing member (18) biases the fluid collection reservoir (12) by a biasing force in the at least one first position, and wherein the biasing force is selected to be overcome by a gravitational force generated by a predefined amount of fluid collected in the fluid collection reservoir (12), so as to move the fluid collection reservoir under gravity into the at least one second position.

2. The condensate collection and discharge unit according to claim 1, wherein the fluid collection reservoir (12) is pivotally mounted, and wherein the movement of the fluid collection reservoir (12) between the at least one first and the at least one second position is a pivoting movement.

3. The condensate collection and discharge unit according to claim 1 or 2, wherein the valve (16) is a poppet valve that extends into the fluid outlet opening (14).

4. The condensate collection and discharge unit according to claim 3, wherein the poppet valve is stationary mounted with respect to the fluid outlet opening (14).

5. The condensate collection and discharge unit according to any of the preceding claims, wherein the fluid collection reservoir (12) has a bottom wall (12c) and at least one side wall (12a, 12b), wherein the fluid outlet opening (14) is provided in the at least one side wall (12a, 12b) of the fluid collection reservoir (12).

6. The condensate collection and discharge unit according to any of the preceding claims, wherein the biasing member (18) comprises a spring, a counterweight or a combination thereof.

7. The condensate collection and discharge unit according to any of the preceding claims, wherein the fluid collection reservoir (12) includes a settling chamber (20) for collecting a first quantity of fluid, before an overflow allows the collected fluid to reach the valve (16).

8. The condensate collection and discharge unit according to claim 7, wherein the settling chamber (20) comprises at least one floating debris-collector that is positioned near the overflow.

9. The condensate collection and discharge unit according to claim 7-8, wherein the fluid collection reservoir (12) is pivotally mounted around a pivot axis, and wherein the movement of the fluid collection reservoir (12) between the at least one first and the at least one second position is a pivoting movement, wherein the pivot axis is a horizontal axis that extends in a vertical plane that also contains a center of gravity of fluid collected in the settling chamber (20).

10. The condensate collection and discharge unit according to any of the claims 1-9, wherein the fluid collection reservoir (12) has a bottom wall (12c) and at least one side wall (12a, 12b, wherein the outlet opening (14) is provided in at least one of the side walls (12a, 12b), and wherein the bottom wall (12c) is downwardly slanted towards a side wall (12a, 12b) that is provided with the outlet opening (14).

11. The condensate collection and discharge unit according to any of the preceding claims, additionally comprising a support frame (24), wherein the fluid collection reservoir (12) and the valve (16) are mounted to the support frame (24).

12. The condensate collection and discharge unit according to any one of the preceding claims, including a magnet and a co-operating part of ferromagnetic material, wherein one of the magnet and the co-operating part of ferromagnetic material is mounted on the moveable fluid collection reservoir (12) and the other one of the magnet and the co-operating part of ferromagnetic material is fixed relative to the valve (16), wherein, when the reservoir is in the at least one first position, the magnet and the co-operating part of ferromagnetic material are attached to each other and wherein, when the reservoir is in the at least one second position, the magnet and the co-operating part of ferromagnetic material are disengaged from each other.

13. Central heating boiler including a heat exchanger and the condensate collection and discharge unit (10) of any one of the preceding claims.

## Patentansprüche

1. Kondensatsammlungs- und -abflusseinheit (10) zum Entfernen von Kondensat aus einem Wärmetauscher, umfassend:
- ein Flüssigkeitssammelreservoir (12) mit einem Flüssigkeitseinlass (22) und einer Flüssigkeitsauslassöffnung (14) zum Abführen von angesammelter Flüssigkeit aus dem Flüssigkeitssammelreservoir; und
- ein Ventil (16), verbunden mit der Flüssigkeitsauslassöffnung (14), um zu verhindern, dass Rauchgase aus der Auslassöffnung (14) abgeführt werden,
**dadurch gekennzeichnet, dass** das Flüssigkeitssammelreservoir (12) angeordnet ist, um zwischen mindestens einer ersten Position, in der die Flüssigkeitsauslassöffnung (14) durch das Ventil (16) geschlossen ist, und mindestens einer zweiten Position, in der die Flüssigkeitsauslassöffnung (14) durch das Ventil (16) freigemacht ist, beweglich zu sein, um das Abführen von angesammelter Flüssigkeit aus dem Flüssigkeitssammelreservoir (12) zu ermöglichen, wobei ein Neigungselement (18) das Flüssigkeitssammelreservoir (12) durch eine Neigungskraft in der mindestens ersten Position neigt und wobei die Neigungskraft ausgewählt ist, um durch eine Schwerkraft, erzeugt von einer vordefinierten Menge Flüssigkeit, gesammelt in dem Flüssigkeitssammelreservoir (12), überwunden zu werden, um das Flüssigkeitssammelreservoir unter Schwerkraft in die mindestens eine zweite Position zu bewegen.

2. Kondensatsammlungs- und -abflusseinheit nach Anspruch 1, wobei das Flüssigkeitssammelreservoir (12) drehend montiert ist und wobei die Bewegung des Flüssigkeitssammelreservoirs (12) zwischen der mindestens einen ersten und der mindestens einen zweiten Position eine drehende Bewegung ist.

3. Kondensatsammlungs- und -abflusseinheit nach Anspruch 1 oder 2, wobei das Ventil (16) ein Tellerventil ist, das in die Flüssigkeitsauslassöffnung (14) verläuft.

4. Kondensatsammlungs- und -abflusseinheit nach Anspruch 3, wobei das Tellerventil ortsfest in Bezug auf die Flüssigkeitsauslassöffnung (14) montiert ist.

5. Kondensatsammlungs- und -abflusseinheit nach einem der vorhergehenden Ansprüche, wobei das Flüssigkeitssammelreservoir (12) eine untere Wand (12c) und mindestens eine Seitenwand (12a, 12b) hat, wobei die Flüssigkeitsauslassöffnung (14) in der mindestens einen Seitenwand (12a, 12b) des Flüssigkeitssammelreservoirs (12) bereitgestellt ist.

6. Kondensatsammlungs- und -abflusseinheit nach einem der vorhergehenden Ansprüche, wobei das Neigungselement (18) eine Feder, ein Gegengewicht oder eine Kombination davon umfasst.

7. Kondensatsammlungs- und -abflusseinheit nach einem der vorhergehenden Ansprüche, wobei das Flüssigkeitssammelreservoir (12) eine Absetzkammer (20) umfasst, um eine erste Menge Flüssigkeit zu sammeln, bevor ein Überlauf zulässt, dass die gesammelte Flüssigkeit das Ventil (16) erreicht.

8. Kondensatsammlungs- und -abflusseinheit nach Anspruch 7, wobei die Absetzkammer (20) mindestens einen Geschwemmselsammler umfasst, der nahe dem Überlauf positioniert ist.

9. Kondensatsammlungs- und -abflusseinheit nach Anspruch 7-8, wobei das Flüssigkeitssammelreservoir (12) drehend um eine Drehachse montiert ist und wobei das Flüssigkeitssammelreservoir (12) zwischen der mindestens einen ersten und der mindestens einen zweiten Position in einer drehenden Bewegung ist, wobei die Drehachse in einer horizontalen Achse ist, die in einer vertikalen Ebene verläuft, die auch ein Schwerkraftzentrum von Flüssigkeit, gesammelt in der Absetzkammer (20), aufweist.

10. Kondensatsammlungs- und -abflusseinheit nach einem der Ansprüche 1-9, wobei das Flüssigkeitssammelreservoir (12) eine untere Wand (12c) und mindestens eine Seitenwand (12a, 12b) hat, wobei die Auslassöffnung (14) in der mindestens einen der Seitenwände (12a, 12b) bereitgestellt ist und wobei die untere Wand (12c) abwärts zu einer Seitenwand (12a, 12b), die mit der Auslassöffnung (14) bereitgestellt ist, geneigt ist.

11. Kondensatsammlungs- und -abflusseinheit nach einem der vorhergehenden Ansprüche, zusätzlich umfassend einen Stützrahmen (24), wobei das Flüssigkeitssammelreservoir (12) und das Ventil (16) an dem Stützrahmen (24) montiert sind.

12. Kondensatsammlungs- und -abflusseinheit nach einem der vorhergehenden Ansprüche, einschließlich eines Magnets und eines zusammenarbeitenden Teils von ferromagnetischem Material, wobei einer von dem Magneten und dem zusammenarbeitenden Teil von ferromagnetischem Material an dem beweglichen Flüssigkeitssammelreservoir (12) montiert ist und der andere von dem Magneten und dem zusammenarbeitenden Teil von ferromagnetischem Material in Bezug auf das Ventil (16) fixiert ist, wobei, wenn das Reservoir in der mindestens einen ersten Position ist, der Magnet und der zusammenarbeitende Teil von ferromagnetischem Material aneinander befestigt sind und wobei, wenn das Reservoir in der mindestens einen zweiten Position ist, der Magnet und der zusammenarbeitende Teil von ferromagnetischem Material voneinander gelöst sind.

13. Zentralheizungskessel, einschließlich eines Wärmetauschers und der Kondensatsammlungs- und -abflusseinheit (10) nach einem der vorhergehenden Ansprüche.

## Revendications

1. Unité de collecte et de refoulement de condensat (10) pour éliminer un condensat d'un échangeur de chaleur, comprenant :
- un réservoir de collecte de fluide (12) comportant une entrée de fluide (22), et une ouverture de sortie de fluide (14) pour refouler le fluide accumulé hors du réservoir de collecte de fluide ; et
- une soupape (16) associée à l'ouverture de sortie de fluide (14) pour empêcher des gaz d'évacuation d'être refoulés par l'ouverture de sortie (14),
**caractérisée en ce que** le réservoir de collecte de fluide (12) est agencé pour être mobile entre au moins une première position dans laquelle l'ouverture de sortie de fluide (14) est fermée par la soupape (16), et au moins une deuxième position dans laquelle l'ouverture de sortie de fluide (14) est dégagée de la soupape (16) afin de permettre le refoulement de fluide accumulé hors du réservoir de collecte de fluide (12), dans laquelle un élément de sollicitation (18) pousse le réservoir de collecte de fluide (12) par une force de sollicitation dans ladite au moins une première position, et dans laquelle la force de sollicitation est choisie pour être dépassée par une force de gravitation produite par une quantité de fluide prédéfinie collectée dans le réservoir de collecte de fluide (12), afin de mettre par gravité le réservoir de collecte de fluide dans ladite au moins une deuxième position.

2. Unité de collecte et de refoulement de condensat selon la revendication 1, dans laquelle le réservoir de collecte de fluide (12) est monté de façon pivotante, et dans laquelle le mouvement du réservoir de collecte de fluide (12) entre ladite au moins une première position et ladite au moins une deuxième position est un mouvement pivotant.

3. Unité de collecte et de refoulement de condensat selon la revendication 1 ou 2, dans laquelle la soupape (16) est une soupape champignon qui s'étend dans l'ouverture de sortie de fluide (14).

4. Unité de collecte et de refoulement de condensat selon la revendication 3, dans laquelle la soupape champignon est montée de façon fixe par rapport à l'ouverture de sortie de fluide (14).

5. Unité de collecte et de refoulement de condensat selon l'une quelconque des revendications précédentes, dans laquelle le réservoir de collecte de fluide (12) a une paroi inférieure (12c) et au moins une paroi latérale (12a, 12b), l'ouverture de sortie de fluide (14) étant formée dans ladite au moins une paroi latérale (12a, 12b) du réservoir de collecte de fluide (12).

6. Unité de collecte et de refoulement de condensat selon l'une quelconque des revendications précédentes, dans laquelle l'élément de sollicitation (18) comprend un ressort, un contrepoids ou une combinaison de ceux-ci.

7. Unité de collecte et de refoulement de condensat selon l'une quelconque des revendications précédentes, dans laquelle le réservoir de collecte de fluide (12) comprend une chambre de dépôt (20) pour collecter une première quantité de fluide, avant qu'un trop-plein permette au fluide collecté d'atteindre la soupape (16).

8. Unité de collecte et de refoulement de condensat selon la revendication 7, dans laquelle la chambre de dépôt (20) comprend au moins un collecteur de débris flottants qui est placé près du trop-plein.

9. Unité de collecte et de refoulement de condensat selon les revendications 7 et 8, dans laquelle le réservoir de collecte de fluide (12) est monté de façon pivotante autour d'un axe de pivotement, et dans laquelle le mouvement du réservoir de collecte de fluide (12) entre ladite au moins une première position et ladite au moins une deuxième position est un mouvement pivotant, l'axe de pivotement étant un axe horizontal qui s'étend dans un plan vertical qui contient aussi un centre de gravité du fluide collecté dans la chambre de dépôt (20).

10. Unité de collecte et de refoulement de condensat selon l'une quelconque des revendications 1 à 9, dans laquelle le réservoir de collecte de fluide (12) a une paroi inférieure (12c) et au moins une paroi latérale (12a, 12b), dans laquelle l'ouverture de sortie (14) est formée dans au moins l'une des parois latérales (12a, 12b), et dans laquelle la paroi inférieure (12c) est inclinée vers le bas en direction d'une paroi latérale (12a, 12b) qui est pourvue de l'ouverture de sortie (14).

11. Unité de collecte et de refoulement de condensat selon l'une quelconque des revendications précédentes, comprenant de plus un cadre de support (24), dans laquelle le réservoir de collecte de fluide (12) et la soupape (16) sont montés sur le cadre de support (24).

12. Unité de collecte et de refoulement de condensat selon l'une quelconque des revendications précédentes, comprenant un aimant et une pièce coopérante en matériau ferromagnétique, dans laquelle un élément parmi l'aimant et la pièce coopérante en matériau ferromagnétique est monté sur le réservoir de collecte de fluide mobile (12) et l'autre élément parmi l'aimant et la pièce coopérante en matériau ferromagnétique est fixe par rapport à la soupape (16), dans laquelle, quand le réservoir est dans ladite au moins une première position, l'aimant et la pièce coopérante en matériau ferromagnétique sont attachés l'un à l'autre et dans laquelle, quand le réservoir est dans ladite au moins une deuxième position, l'aimant et la pièce coopérante en matériau ferromagnétique sont dégagés l'un de l'autre.

13. Chaudière de chauffage central comprenant un échangeur de chaleur et l'unité de collecte et de refoulement de condensat (10) selon l'une quelconque des revendications précédentes.
